# EUROPEAN PATENT APPLICATION

(11) **EP 2 456 237 A1**
(43) Date of publication of application: **23.05.2012**
(21) Application number: 10799435.2
(22) Date of filing: 15.07.2010
(51) Int. Cl.: H04W 4/00

(54) **OPERATION CONTROL METHOD OF MACHINE TO MACHINE USER EQUIPMENT, SYSTEM AND MACHINE TO MACHINE USER EQUIPMENT**

(30) Priority: 15.07.2009 CN 200910151999
(71) Applicant: Huawei Technologies Co., Ltd., Shenzhen, Guangdong 518129 (CN)
(72) Inventor: WU, Wenfu, Shenzhen Guangdong 518129 (CN); SUN, Xiaoji, Shenzhen Guangdong 518129 (CN); CHEN, Zhongping, Shenzhen Guangdong 518129 (CN)
(74) Representative: Isarpatent
(86) International application number: PCT/CN2010/075169
(87) International publication number: WO 2011/006437

(57) **Abstract**

An operation control method of a user equipment in machine to machine (M2M) application is provided in the embodiments of the present invention. The method includes: information including an operation indication sent by a network side is received, and the operation indication includes at least one of indications that instructs a user equipment (UE) or a UE in a group to perform registration, activate subscriber data, and transmit service data; and the UE or the UE in the group performs an operation according to the received operation indication. A corresponding user equipment, server and control system are also provided. The network side controls the user equipment to perform the operation, and can instruct the UE to perform the operation such as the registration, the subscriber data activation or the service data transmission at any time. The UE or the UE in the group may be in a dormant state or in a de-registration state, the impact and effect on the network side by a large number of UEs are reduced, so as to improve the utilization ratio of network resources greatly, satisfy a current M2M application, and provide convenient and effective services to operators and users.

## Description

This application claims priority to China Patent Application No. 200910151999.9, entitled "OPERATION CONTROL METHOD OF M2M USER EQUIPMENT, SYSTEM AND M2M USER EQUIPMENT" and filed on July 15, 2009, which is incorporated herein by reference in its entirety.

### FIELD OF THE INVENTION

The present invention relates to the field of wireless communications technologies, and in particular, to an operation control method of a machine to machine application user equipment, a system and a user equipment.

### BACKGROUND OF THE INVENTION

Machine type communications (MTC, Machine Type Communications) application refers to network communications performed between one or more network elements without the participation of humans, that is, a machine to machine (M2M, Machine To Machine) application, such as traffic control and management, machine and equipment monitoring in factories, and remote meter reading. Mobile communication networks are quite advantageous in a large number of MTC applications; however, the current mobile communication networks mainly have optimizations and constructions for human to human (H2H, Human To Human) applications, and have fewer optimizations and constructions for M2M applications, M2H, and H2M. In the MTC applications, multiple M2MEs having the same MTC application form an entirety, which is referred to as a group for short. Network operators or industry users may manage or control a group as a whole, and identify each group with a group identity for distinguishing different groups, so as to differentiate different groups. For example, for a remote meter reading application in the power industry, all electricity meters of a certain urban district may form a group, and the network operators and industry users may perform mobility management optimization or access management on the group by considering the group as a whole. MTC application system architecture mainly includes several logical functional entities such as a mobility management network element, an MTC server (MTC Server), an access network element, and an HSS, where the mobility management network element is responsible for NAS signaling and NAS signaling encryption, and functions such as roaming, tracking, allocating temporary identities for users, and security function. The MTC application server is stored with data or information related to the user equipment UE and/or the group. The home subscriber server (HSS, Home Subscriber Server) mainly stores subscriber data related to the UE or the group, where the subscriber data of the UE refers to subscriber data of each UE as an individual, and the subscriber data of the group refers to common data or subscriber data of the UEs in the group.

In the prior art, the UE may select an available network and register in the network when the UE is switched on, and the network side cannot deliver any indication or data to a UE when the UE is in a non-registered state.

For the M2M application, the conventional H2H mechanism may not be applicable. For example, most UEs applicable to the M2M application are mounted in untouchable fields or environments, and the M2M applications are broad and have a large number of UEs; therefore, switching on and off the UEs manually is not a high-efficient and practical way. Therefore, most UEs of the M2M applications are in an ON state for a long time. In order to reduce the impact and effect of a large number of UEs of the M2M application on the network side, the operators will control behaviors of the UEs, for example, the network side controls a UE to register in the network at a specific time, or the network side controls a UE to perform service operation at a specific time, or the network side controls a UE to perform subscriber data activation at a specific time. As a result, in many circumstances, a UE may not register in the network immediately upon the switching-on, or the UE may not perform service or subscriber data activation at any time, and therefore, the prior art cannot satisfy the current M2M application.

### SUMMARY OF THE INVENTION

Embodiments of the present invention provide an operation control method of an M2M user equipment, a system and an M2M user equipment, which are capable of implementing that a network side instructs a UE to perform an operation.

An operation control method of a machine to machine application M2M user equipment provided in an embodiment of the present invention includes:
receiving information that includes an operation indication and is sent by a network side; the operation indication includes at least one of the following indications: an indication that instructs a user equipment UE or a user equipment UE in a group to perform registration, an indication that instructs a user equipment UE or a user equipment UE in a group to activate subscriber data, or an indication that instructs a user equipment UE or a user equipment UE in a group to perform service data transmission; and
performing, by the user equipment UE or the user equipment UE in the group, an operation according to the received operation indication.

A machine to machine application M2M user equipment provided in an embodiment of the present invention includes:
a first receiving unit, configured to receive an operation indication sent by a network side, where the operation indication includes at least one of the following indications: an indication that instructs a UE or a UE in a group to perform registration, an indication that instructs a user equipment UE or a UE in a group to activate subscriber data, or an indication that instructs a user equipment UE or a UE in a group to perform service data transmission; and
an operating unit, configured to perform an operation according to the received operation indication.

A server provided in an embodiment of the present invention includes:
an information generating unit, configured to initiate an operation indication request that instructs an M2M user equipment UE or a user equipment in a group to operate, where the operation indication includes at least one of the following indications:
   an indication that instructs the M2M user equipment UE or the M2M user equipment UE in the group to perform registration, an indication that instructs the user equipment UE or the user equipment UE in the group to activate subscriber data, or an indication that instructs the M2M user equipment UE or the M2M user equipment UE in the group to perform service data transmission; and
   a sending unit, configured to send the operation indication.

An operation control system of a user equipment provided in an embodiment of the present invention includes:
a server, configured to initiate an operation indication request that instructs a user equipment UE or a UE in a group to operate;
a broadcast/multicast-service centre BM-SC, configured to learn a multimedia broadcast/multicast-service gateway MBMS-GW according to position information of the user equipment UE or the UE in the group, and send a request message to the MBMS-GW after the operation indication request is received from the server;
the multimedia broadcast/multicast-service gateway MBMS-GW, configured to learn a multimedia broadcast/multicast service MBMS control plane entity or an MBMS control plane entity list according to the position information of the user equipment UE or the UE in the group; allocate a multicast address and send the request message to the MBMS control plane entity or all MBMS control plane entities in the MBMS control plane entity list;
the MBMS control plane entity, configured to send the request message to an access network element corresponding to the user equipment UE or the UE in the group, where the message includes an IP multicast address and an identity of the user equipment UE, or the message includes an IP multicast address and an identity of the group; and
the access network element, configured to send the operation indication to the user equipment UE or the UE in the group according to the multicast address; where
the operation indication includes at least one of the following indications:
   an indication that instructs the user equipment UE or the user equipment UE in the group to perform registration, an indication that instructs the user equipment UE or the UE in the group to activate subscriber data, or an indication that instructs the user equipment UE or the UE in the group to perform service data transmission.

Another operation control system of a user equipment provided in an embodiment of the present invention includes:
a server, configured to initiate an operation indication request that instructs a user equipment UE or a user equipment in a group to operate; learn a cell broadcast entity CBE of the user equipment UE or the UE in the group, and send an operation indication sending request to the cell broadcast entity CBE;
the cell broadcast entity CBE, configured to receive the operation indication sending request from the server; select a cell broadcast centre CBC according to position information of the UE or the UE in the group, and send the operation indication sending request to the cell broadcast centre CBC;
the call broadcast centre CBC, configured to receive the operation indication sending request from the cell broadcast entity CBE; determine a mobility management network element or all mobility management network elements in a mobility management network element identity list according to the position information of the user equipment UE or the UE in the group, and send the operation indication sending request to the determined mobility management network element or all the mobility management network elements in the mobility management network element identity list;
the mobility management network element, configured to send the operation indication sending request from the cell broadcast centre to an access network element or all access network elements in an access network element list, where the access network element or all the access network elements in the access network element list can serve the UE or the UE in the group, and the message includes an operation indication and at least one of a UE identity and a group identity; and
the access network element, configured to send the operation indication to the user equipment UE or the UE in the group; where
the operation indication includes at least one of the following indications:
   an indication that instructs the user equipment UE or the user equipment UE in the group to perform registration, an indication that instructs the user equipment UE or the user equipment UE in the group to activate subscriber data, or an indication that instructs the user equipment UE or the user equipment UE in the group to perform service data transmission.

In view of the foregoing description, in the technical solutions provided by the embodiments of the present invention, a network side sends information that includes an operation indication to an M2M user equipment UE or a UE in a group, the operation indication includes at least one of the following indications: an indication that instructs the user equipment UE or the user equipment UE in the group to perform registration, an indication that instructs the user equipment UE or the user equipment UE in the group to activate subscriber data, or an indication that instructs the user equipment UE or the user equipment UE in the group to perform service data transmission; and the user equipment performs an operation according to the operation indication after receiving the operation indication. The network side controls the user equipment to perform the operation, and can instruct the UE to perform the operation such as the registration, the subscriber data activation or the service data transmission at any time. The UE or the UE in the group may be in a dormant state or in a de-registration state, the impact and effect on the network side by a large number of user equipments UEs are reduced, so as to improve the utilization ratio of network resources greatly and satisfy the current M2M application. The delivery and execution of the operation indication do not need the participation of humans, thereby providing convenient and effective services to operators and users.

### BRIEF DESCRIPTION OF THE DRAWINGS

FIG. 1 is a flow chart of an operation control method of a user equipment provided in Embodiment 1 of the present invention;

FIG. 2 is a flow chart of an operation control method of a user equipment provided in Embodiment 2 of the present invention;

FIG. 3 is a flow chart of an operation control method of a user equipment provided in Embodiment 3 of the present invention;

FIG. 4 is a flow chart of an operation control method of a user equipment provided in Embodiment 4 of the present invention;

FIG. 5 is an architecture diagram of a user equipment provided in an embodiment of the present invention;

FIG. 6 is a schematic architecture diagram of an operation control system of a user equipment provided in an embodiment of the present invention;

FIG. 7 is a schematic architecture diagram of another operation control system of a user equipment provided in an embodiment of the present invention; and

FIG. 8 is a schematic architecture diagram of still another operation control system of a user equipment provided in an embodiment of the present invention.

### DETAILED DESCRIPTION OF THE EMBODIMENTS

In order to reduce impact and effect on a network side caused by a large number of user equipments UEs in an M2M application, operations or users need to control operations of the UEs, so as to satisfy a current M2M application. Accordingly, an embodiment of the present invention provides an operation control method of a user equipment, which is capable of instructing, according to a requirement, a user equipment UE or a user equipment UE in a group to perform a corresponding operation, such as registration, subscriber data activation, and service data transmission. After receiving the operation indication, the user equipment performs an operation according to the operation indication. The UE in the group refers to some UEs in the group or all UEs in the group. The service data transmission may refer to sending or receiving service data, or creating or modifying service resources.

The user equipment UE mentioned in the embodiment of the present invention refers to a machine to machine application equipment (M2ME, Machine To Machine Equipment), and M2ME is a common name of M2M application equipment. In this application document, the user equipment UE is adopted to represent the M2M application equipment.

A machine-type communications user (that is, M2M User) or an operator sends an operation indication to a single UE or a UE in a group, the UE or the UE in the group initiates service data transmission, mobility management process, or session management process according to the operation indication (in the embodiment of the present invention, the operation indication refers to that the network side instructs the UE or the UE in the group to initiate the mobility management process, session management process, or service data transmission, for example, an indication that instructs the UE or the UE in the group to perform subscriber data activation, an indication that instructs the UE or the UE in the group to perform registration, or an indication that instructs the UE or the UE in the group to perform service data transmission). The indication that instructs the UE or the UE in the group to initiate the service data transmission may refer to that the UE or the UE in the group sends or receives service data, or the UE or the UE in the group initiates a session management process for creating or modifying network resources, such as, a PDP context activation process, PDP context modification process, PDN connection establishment process, or resource creation or modification process.

If an M2M user or an operator requires that a UE or a UE in a group performs a certain operation, the network side sends an operation indication to the UE or the UE in the group, the UE or the UE in the group obtains the operation indication, and performs a corresponding operation according to the operation indication. In the embodiment of the present invention, the operation indication may be any one or more of the following indications: an indication that instructs the UE or the UE in the group to perform registration, an indication that instructs the UE or the UE in the group to perform subscriber data activation, or an indication that instructs the UE or the UE in the group to perform service data transmission.

For example, the M2M User or operator instructs the UE or the UE in the group to register in a network (including that the UE or the UE in the group registers in a home PLMN, or the UE or the UE in the group registers in a replaced PLMN): the network side sends an operation indication to the UE or the UE in the group, and the operation indication is an indication that instructs the UE or the UE in the group to perform registration. Specifically: the network side sends information including an operation indication to the UE or the UE in the group, the operation indication is the indication that instructs the UE or the UE in the group to perform the registration, and the UE or the UE in the group selects a corresponding PLMN to perform the registration. In addition, a PLMN identity may be adopted to serve as the indication that instructs the UE or the UE in the group to perform the registration. Specifically: the network side (in the embodiment of the present invention, the network side may refer to an MTC Server, a mobility management network element, an access network element, an HSS, or another server configured to deliver policies or data) delivers the PLMN identity to the UE or the UE in the group, and the UE or the UE in the group selects a home PLMN or a replaced PLMN to perform the registration.

In the embodiment of the present invention, the operation indication may have many forms. The indication that instructs the UE or the UE in the group to perform registration may have many forms, for example, a register indication Register indication, a real-time triggered massage, or a request message Register Request that instructs the UE or the UE in the group to perform registration. Further, the information including the operation indication further includes a time point or a period of time, or an event; and the user equipment or the user equipment UE in the group performs the registration at the time point, or in the period of time, or under triggering of the event. The indication that instructs the UE or the UE in the group to perform subscriber data activation may have many forms, for example, Subscriber Data Activated indication, a Subscriber Data Activated Trigger that instructs the UE or the UE in the group to perform subscriber data activation at a specific time point or in a specific period of time or under triggering of a specific event, or a subscriber data activation request Subscriber Data Activated Request. The indication that instructs the UE or the UE in the group to initiate service data transmission may have many forms, for example, Service Initiated indication, Service Initiated Request, or a Service Activated Trigger that instructs the UE or the UE in the group to initiate service data transmission at a specific time point or in a specific period of time or under triggering of a specific event.

An operation control method of an M2M user equipment provided in an embodiment of the present invention includes:
receiving information that includes an operation indication and is sent by a network side; the operation indication includes at least one of the following indications: an indication that instructs a user equipment UE or a user equipment UE in a group to perform registration, an indication that instructs a user equipment UE or a user equipment UE in a group to activate subscriber data, or an indication that instructs a user equipment UE or a user equipment UE in a group to perform service data transmission.

The information including the operation indication may be a message, such as a paging request message and a Non-Access-Stratum NAS message, or may be a data packet or command information of other formats.

After receiving the operation indication, the user equipment UE or the user equipment UE in the group performs an operation according to the operation indication.

The operation indication is sent to the user equipment UE through a paging request message, a Non-Access-Stratum NAS message, an Open Mobile Alliance Device Management OMA DM manner, Over-The-Air OTA, a multicast manner, or a broadcast manner. In addition to sending the operation indication, the network side may also send a public land mobile network PLMN identity to the UE or the UE in the group, and the PLMN identity is used to instruct the UE or the UE in the group to perform the operation, including registration, subscriber data activation, or service data transmission, in a mobile communications network corresponding to the PLMN identity.

When the network side sends information including the operation indication, the information including the operation indication further includes UE addressing information, and the UE addressing information is used to address the user equipment UE or the user equipment UE in the group, where the user equipment UE or the user equipment UE in the group needs to perform the operation according to the operation indication.

The UE addressing information includes at least one of the following: a user equipment identity, a group identity, an IP address, and a multicast address.

The PLMN identity and the operation indication may be sent to the user equipment together. For example, the PLMN identity may be included in an operation indication request message sent by the network side to the user equipment, and definitely, the embodiment of the present invention does not exclude a situation of additionally delivering the PLMN identity singly.

The user equipment UE performs the operation according to the operation indication in a mobile communications network corresponding to the PLMN identity.

Further, after receiving the operation indication, the UE or the UE in the group notifies the network side that the UE or the UE in the group receives the operation indication.

If the user equipment UE does not receive the operation indication, a corresponding state of the user equipment UE or the UE in the group is set, where the state includes at least one of the following states: a non-registered state, subscriber data non-activated state, or service non-initiated state; and/or the network side sends the operation indication to the user equipment UE again.

A server starts a timer after sending an operation indication request message;
in a time limit set by the timer, the server does not receive an operation indication sending response message sent by a mobility management network element; or
the server receives the operation indication sending response message sent by the mobility management network element, where the response message includes indication information indicating that the UE or the UE in the group does not receive the operation indication; or
in a predetermined time, the server does not receive acknowledgement information that is sent by a corresponding UE or the UE in the group and indicates that the operation indication is received, and the server determines that the operation indication is not sent to the corresponding UE or the UE in the group.

In order to make principles and characteristics of embodiments of the present invention more clearly, the embodiments of the present invention are illustrated in detail with reference to specific implementation solutions below.

### Embodiment 1

If an M2M user or an operator needs to instruct a UE or a UE in a group to perform a certain operation, a network side sends an operation indication to the UE or the UE in the group, and the UE or the UE in the group obtains the operation indication, and performs a corresponding operation, such as registration, subscriber data activation, and service data transmission, according to the operation indication.

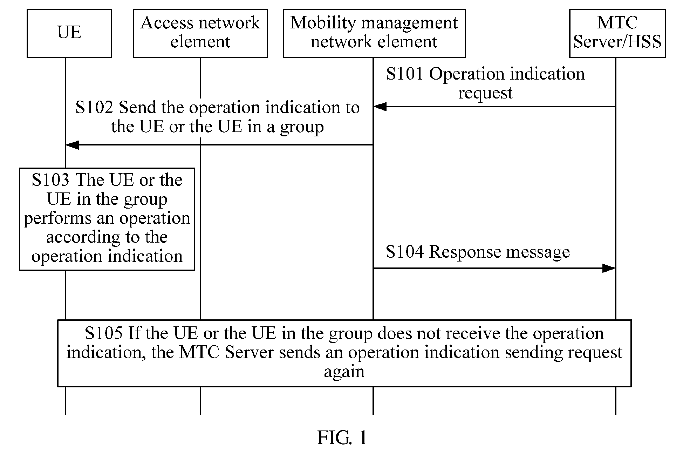

Referring to FIG. 1, an operation control method of an M2M user equipment provided in an embodiment of the present invention includes the following steps:

S101: A server sends information including an operation indication to a mobility management network element.

Here, the information including the operation indication may be a message, such as a paging request message and a Non-Access-Stratum NAS message, or may be a data packet or command information of other formats.

In the embodiment of the present invention, the server may refer to a server such as an MTC server (MTC Server) or an HSS. In the embodiment of the present invention, the MTC server is: an M2M application server, the server includes information or data about the UE or the group. In the embodiment of the present invention, position information of the UE or the group, a group identity, identities of UEs in the group, a registration state of the UE or the group, or a subscriber data activation state may all be stored in the MTC server (MTC Server), the MTC server may also be a server used by an M2M industry user or an operator to deliver an operation indication, and the embodiment of the present invention does not limit a name of the server, in which the MTC server may be called as a server, and the HSS that manages subscriber data of the UE or the UE in the group may also be called as a server.

According to a requirement of the M2M user or the operator that requires the user equipment UE to perform the operation, the operation indication is delivered to the UE or the UE in the group, and the operation indication is used to command the user equipment UE to perform a corresponding operation. If the server sends the operation indication to a single UE, the message includes a UE identity (such as an IMSI) and the operation indication; and if the server sends the operation indication to the UE in the group, the message includes a group identity (such as a Group ID or the IMSI) and the operation indication.

Specifically, the server sends the information including the operation indication to the mobility management network element, and the message is a message indicating that the server sends the operation indication to the mobility management network element, and optionally, the message includes a PLMN identity used for instructing the UE or the UE in the group to perform an operation, such as registration, or subscriber data activation, or service data transmission, in the PLMN. In the embodiment of the present invention, a message type or a message name of the message is not limited, for example, the message may be a message such as an operation indication request message, a subscriber data insertion reply, and an Update Location Ack.

Alternatively, the server sends the operation indication to the UE or the UE in the group in an Over-The-Air OTA manner. The Over-The-Air OTA is a technique of performing information data interaction between the UE and the server based on an air interface, so as to realize remote management on UE data. Specifically: the server determines a serving mobility management network element or a mobility management network element identity list of the UE or the UE in the group according to position information of the UE or the UE in the group (specific implementation will be illustrated in detail below). The server sends the operation indication to the mobility management network element or all mobility management network elements in the mobility management network element identity list, and the mobility management network element sends the operation indication to the UE or the UE in the group. Alternatively, the server determines a serving gateway or gateway list of the UE or the UE in the group according to the position information of the UE or the UE in the group. The server sends the operation indication to the gateway or all gateways in the gateway list. The gateway sends the operation indication to the UE or the UE in the group through a data plane.

Optionally, the server may start a timer, and the timer is a timer for the server to determine whether the UE or the UE in the group receives the operation indication sent by the server. If the UE or the UE in the group does not receive content sent by the server, the server may set a state of the UE or the UE in the group as a Non-Registered state (if the operation indication is indication information that instructs the UE or the UE in the group to perform registration), a Non-Activated state (if the operation indication is indication information that instructs the UE or the UE in the group to perform subscriber data activation), or a Non-initiated Service state (if the operation indication is indication information that instructs the UE or the UE in the group to perform service data transmission). A manner for the server to learn that the UE or the UE in the group does not receive the operation indication may be that the server does not receive an operation indication response message sent by the mobility management network element, an operation indication response sent by the mobility management network element is used to notify an MTC Server that the UE or the UE in the group does not receive the operation indication, or the server does not receive an acknowledgement data packet sent by a corresponding UE or UE in the group. The timer may ensure that the UE or the UE in the group receives the operation indication sent by the network side, and a waste of network resources can be avoid at the same time.

In the embodiment of the present invention, the mobility management network element may be: a mobile management entity (MME, Mobile Management Entity) in an E-UTRAN network; or a serving GPRS support node SGSN in a UTRAN/GERAN network; or a mobility management logical functional entity in an ePDG of a WLAN network; or an automatic switching node gateway ASN GW in a Wimax network; or a mobility management logical functional entity in a high rate packet data access network HRPD AN of a CDMA network. If the server sends the operation indication to a single UE, the request message includes a UE identity (such as an IMSI) and the operation indication; and if the server sends the operation indication to the UE in the group, the message includes a group identity (such as a Group ID or the IMSI) and the operation indication. In addition, the message may further include a public land mobile network PLMN identity, and the PLMN identity is used to instruct the UE or the UE in the group to perform the registration in a mobile communications network indicated by the PLMN identity.

Optionally, in an M2M application, a position of the UE or the UE in the group is mostly fixed or nomadic (that is, the UE rarely moves), so even the UE does not perform the registration, position information of the UE or the UE in the group may still be subscribed or saved in the server. The position information refers to a position where the UE or the UE in the group locates, and includes information capable of representing the position where the UE or the UE in the group locates, such as a position area identity (for example, TAI, RAI, LAI or TAI List), a cell identity, a cell identity list, an access network element identity, or an access network element identity list. If the UE is not attached or the server cannot learn the serving mobility management network element attached to the UE, the server may construct a fully qualified domain name (FQDN, Fully Qualified Domain Name) by using the position information to perform a DNS domain name query, so as to obtain an available mobility management network element identity list (that is, multiple mobility management network elements) or an available mobility management network element. If the UE is attached, the server may learn, according to a conventional manner, the mobility management network element corresponding to the UE according to a cell to which the UE is attached. Or, the server is statically configured with the available mobility management network element identity list or the available mobility management network element of the UE or the UE in the group. The server sends an operation indication request message to all mobility management network elements in the mobility management network element identity list or the available mobility management network element. The operation indication request message is a message for the server to send the operation indication to the mobility management network element, and in the embodiment of the present invention, a message type or a message name of the message is not limited.

S102: The mobility management network element sends the information including the operation indication to the UE or the UE in the group.

The mobility management network element may send the operation indication to the UE or the UE in the group through a mechanism such as a paging, broadcast, multicast, or Non-Access-Stratum (NAS, Non-Access-Stratum) message.

When the mobility management network element sends the information including the operation indication, the information further includes UE addressing information, and the UE addressing information is used to address the user equipment UE or the user equipment UE in the group that needs to perform the operation according to the operation indication.

The UE addressing information includes at least one of the following: a user equipment identity, a group identity, an IP address, and a multicast address.

Specifically, the PLMN identity may be sent to the user equipment together with the operation indication and a user equipment UE identity or together with the operation indication and an identity of a group to which the user equipment UE belongs.

If the mobility management network element sends the operation indication to a single UE, and the UE is attached, the mobility management network element corresponding to the UE may be learned according to a cell to which the UE is attached, and the mobility management network element pages the UE at the position where the UE locates, where a paging request message includes the UE identity (such as an IMSI of the UE) and the operation indication, and may also include a PLMN identity at the same time. If the operation indication is sent to the UE in the group, the paging request message includes a group identity (such as the IMSI of the UE) and the operation indication, and may also include a PLMN identity at the same time. The user equipment UE or the user equipment UE in the group performs, according to the operation indication, an operation in a mobile communications network indicated by the PLMN identity.

If the mobility management network element sends the operation indication to a single UE in a broadcast or multicast manner, the mobility management network element instructs the access network element to send a broadcast message or multicast message, and the broadcast or multicast message includes the UE identity and the operation indication, and optionally, may also include a PLMN identity at the same time. If the operation indication is sent to the UE in the group, the broadcast or multicast message includes the group identity (such as the IMSI of the UE) and the operation indication, and may also include a PLMN identity at the same time. In the embodiment of the present invention, the access network element is: an eNodeB or HeNB in the E-UTRAN network; or an RNC or a BSC in the UTRAN/GERAN network; or an access network logical functional entity of an ePDG in the WLAN network; or an ASN BS in the Wimax network; or an access network logical functional entity of an HRPD AN in the CDMA network.

If the mobility management network element sends the operation indication to a single UE by using a Non-Access-Stratum NAS message, the mobility management network element sends the NAS message including the operation indication to the UE, and a PLMN identity and/or a UE identity may also be included. If the operation indication is sent to the UE in the group, the NAS message including the operation indication is sent by the mobility management network element, and the NAS message including a PLMN identity and/or a group identity is sent by the mobility management network element. The NAS message includes TAU Accept, RAU Accept, LAU Accept, Detach Request, Detach Accept, GUTI Reallocation Command, Attach Accept, or another message used to send the operation indication (such as, Network Command Transfer). For example, the mobility management network element may obtain subscriber data from the HSS in an attaching procedure of the UE or the UE in the group, the subscriber data includes the operation indication sent to the UE or the UE in the group, and the mobility management network element sends an Attach Accept message including the operation indication to the UE or the UE in the group, and optionally, may also sends an Attach Accept message including a PLMN identity.

In addition, the mobility management network element may start a timer, and the timer is used for the mobility management network element to determine whether the UE or the UE in the group receives the operation indication in a predetermined time. In this way, it may be ensured that the UE or the UE in the group receives the operation indication sent by the network side, and a waste of network resources is avoided at the same time.

S103: The UE or the UE in the group obtains the operation indication, and performs a corresponding operation, such as registration, subscriber data activation or service data transmission, according to the operation indication.

If the operation indication is an indication that instructs the UE or the UE in the group to perform registration, the UE or the UE in the group performs the registration. For example, the UE or the UE in the group performs the registration at a specific time point, or in a period of time, or under triggering of a specific event.

If the operation indication obtained by the UE or the UE in the group is indication information that instructs the UE or the UE in the group to perform subscriber data activation, the UE or the UE in the group activates subscriber data. If the UE or the UE in the group also obtains the PLMN identity, the UE or the UE in the group activates the subscriber data in the PLMN, or the UE or the UE in the group activates the subscriber data at a specific time point, or in a period of time, or under triggering of a specific event.

If the operation indication is an indication that instructs the UE or the UE in the group to perform service data transmission, the UE or the UE in the group performs service data transmission. For example, the service data transmission is performed, or the UE or the UE in the group performs the service data transmission at a specific time point, or in a period of time, or under triggering of a specific event.

In addition, optionally, the PLMN identity may be sent to the UE or the UE in the group together with the operation indication. The PLMN identity is used to instruct the UE or the UE in the group to perform the operation in the PLMN, and UE or the UE in the group performs the operation, such as registration, subscriber data activation, or service data transmission, in the PLMN.

Further, after receiving the operation indication, the UE or the UE in the group notifies the mobility management network element, for example, the UE or the UE in the group notifies, through a registration request, the mobility management network element that the UE or the UE receives the operation indication, the UE or the UE in the group sends an acknowledgement message to notify the mobility management network element that the UE or the UE receives the operation indication, or the UE or the UE in the group notifies, in a Service Request process, the mobility management network element that the UE or the UE receives the operation indication. Or, after the UE or the UE in the group receives the data sent by the server, the UE or the UE in the group may send, to the server, acknowledgement information indicating that the operation indication is received (the acknowledgement information may be information capable of indicating that the UE or the UE in the group has received the operation indication, such as an acknowledgement data packet, a characteristic message type, or a specific indication), so as to notify the server that the UE or the UE in the group has received the operation indication.

S104: (Optional), the mobility management network element sends a response message to the server, and the message is used for the mobility management network element to notify the server whether the UE or the UE in the group receives the operation indication.

In a predetermined time, if the mobility management network element receives a notification message that is fed back by the UE or the UE in the group and indicates that the operation indication is received, a response message sent by the mobility management network element to the server includes indication information indicating that the operation indication is sent successfully (for example, the indication information may be represented by indication information such as a specific message type, a specific reason value, or a success indication), and the UE identity or a list of UE identity or the group identity indicating that the operation indication is received successfully. In the predetermined time, if the mobility management network element does not receive the message fed back by the UE or the UE in the group, a response message sent to the server includes indication information indicating that the sending of the operation indication fails (for example, the indication information may be represented by indication information such as a specific message type, a specific reason value, or a failure indication); so as to notify the server whether the UE or the UE in the group has received the operation indication. In the embodiment of the present invention, a name of the message is not limited. The message includes the UE identity or the UE identity list or the group identity indicating that the operation indication is received successfully.

Specifically, a mobility management network element starts a timer to perform timing, after sending the operation indication to the UE or the UE in the group.

In a predetermined time, if the UE or the UE in the group notifies the mobility management network element that the UE or the UE in the group receives the operation indication, a corresponding mobility management network element stops the timer and sends an operation indication sending response message to the server, where the message is used for the mobility management network element to notify the server whether the UE or the UE in the group receives the operation indication, such as, whether the operation indication is sent to the UE or the UE in the group successfully, or a reason for sending the operation indication in failure. If the operation indication is sent successfully, the message may include the UE identity or the UE identity list or the group identity indicating that the operation indication is received successfully. In the embodiment of the present invention, the name of the message is not limited.

In addition, if a set timer expires, and the mobility management network element does not receive a notification message that is sent by the UE or the UE in the group and indicates that the operation indication is received, the mobility management network element may resend the operation indication, so as to send the operation indication to the UE or the UE in the group again through a mechanism such as paging, broadcast, or the NAS message in the manner as described in step S102.

Further, in order to save resources in the mobility management network element, if the mobility management network element learns a notification of the UE or the UE in the group that the operation indication is not received, the mobility management network element may clear all information of the UE or the UE in the group on the mobility management network element (including the timer, the position information or the operation indication).

S105: After learning that the user equipment UE or the user equipment UE in the group does not receive the operation indication, the server sends the operation indication to the user equipment UE or the UE in the group again.

Manners for the server to learn that the UE or the UE in the group does not receive the operation indication include:

The server does not receive an operation indication response message sent by the mobility management network element, and an operation indication sending response sent by the mobility management network element, where the response message includes indication information indicating that the UE or the UE in the group does not receive the operation indication (the indication information may be indication information capable of indicating that the UE or the UE in the group does not receive the operation indication, such as a failure reason, a failure indication, or a specific message type); or the server does not receive acknowledgement information that is sent by a corresponding UE or the UE in the group and indicates that the operation indication is received (for example, information capable of indicating that the UE or the UE in the group determines that the operation indication is received, such as an acknowledge data packet or an acknowledge indication). In this way, it may be determined whether the UE or the UE in the group receives the operation indication sent by the network side, and a waste of network resources is avoided at the same time. In addition, in order to judge whether the operation indication is successfully sent to the corresponding UE, a timer may be set for the server to determine that the UE or the UE in the group receives, in the predetermined time, the operation indication sent by the server, after the server sends the operation indication request message, the server starts the timer, and before the timer expires, if the UE or the UE in the group does not receive content sent by the server, the server judges that the operation indication is not sent to a corresponding UE, and sets a state of the UE or the UE in the group, for example, a non-registered Non-Registered state, a subscriber data non-activated Non-Activated state, or a Non-initiated Service state.

After the timer expires, an application layer does not receive data reported by the UE or the UE in the group; after the timer expires, the server does not query registration information of the UE or the UE in the group, or the server learns from the mobility management network element that the UE, a UE list, or the group identity of the operation indication is not received, and the server judges that the operation indication is not sent to a corresponding UE or the UE in the group.

If the server learns that the UE or the UE in the group does not receive the operation indication, the server may send an operation indication request message again to the available mobility management network element or all the mobility management network elements in the mobility management network element identity list according to the manner described in step S101.

In this embodiment, the network side sends the operation indication to the user equipment UE or the UE in the group, and after the user equipment receives the operation indication, the user equipment performs the operation according to the operation indication. The network side triggers the user equipment to perform the operation, and the UE or the UE in the group may be in a dormant state or a de-registration state, thereby greatly improving the utilization ratio of network resources and reducing a waste of the network resources.

### Embodiment 2

Different from Embodiment 1, in this embodiment, a network side sends an operation indication to a UE or a UE in a group in an Open Mobile Alliance Device Management OMA DM manner.

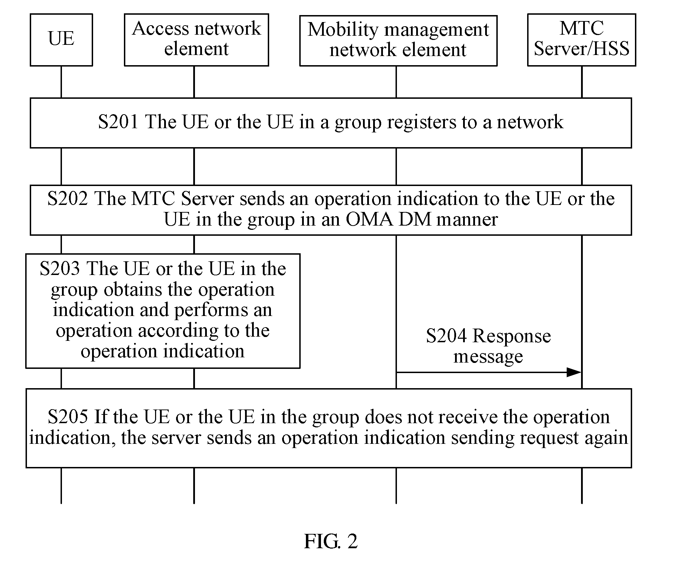

Referring to FIG. 2, an operation control method of a user equipment provided in an embodiment of the present invention includes the following steps:
S201: A UE or UE in a group registers in a network, a mobility management network element initiates a bearer creation process to complete a data plane bearer connection between the UE and a server, and the server learns an IP address of the UE or the UE in the group; and
S202: The server sends an operation indication to the UE or the UE in the group in an OMA DM manner.

The network side sends, to the user equipment, the operation indication and a user equipment UE identity or a group identity of a group to which the user equipment UE belongs in the Open Mobile Alliance Device Management OMA DM manner.

The OMA DM is a technique of performing information data interaction between the UE and the server based on a data plane, so as to realize remote management on UE data. Specifically: the server sends the operation indication to the UE or the UE in the group through a data plane bearer between the UE and the server according to the IP address of the UE or the UE in the group.

The message may further include a PLMN identity, and the PLMN identity is used to instruct the UE or the UE in the group to perform an operation, such as registration, subscriber data activation, or service data transmission, in the PLMN.

S203: The UE or the UE in the group obtains the operation indication, and performs a corresponding operation, such as registration, subscriber data activation or service data transmission, in a network according to the operation indication.

Steps S203 to S205 are basically the same as the step S103 in Embodiment 1, and are not repeated here.

In this embodiment, the network side sends the operation indication to the user equipment UE or the UE in the group in the Open Mobile Alliance Device Management OMA DM manner, without the need of additionally adopting another message to include the operation indication, so that the sending of the operation indication becomes more convenient. The network side triggers the user equipment to perform the operation, and the user equipment performs the operation according to the operation indication. The UE or the UE in the group may be in a dormant state or a de-registration state, thereby greatly improving the utilization ratio of network resources and reducing a waste of the network resources.

### Embodiment 3

In this embodiment, a network side sends an operation indication to a UE or a UE in a group in a multicast manner.

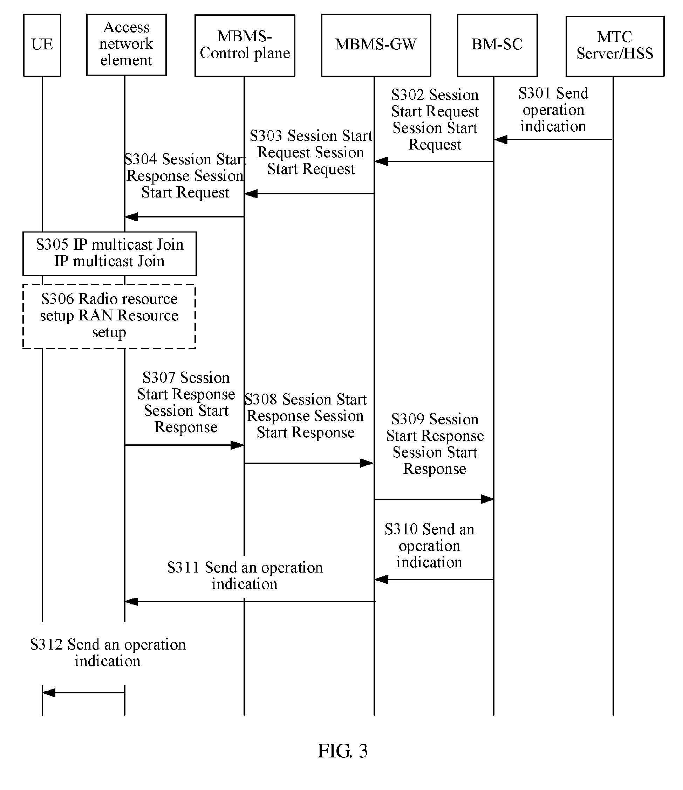

Referring to FIG. 3, an operation control method of a user equipment provided in an embodiment of the present invention includes the following steps:

S301: A server sends an operation indication sending message to a broadcast/multicast-service centre BM-SC, the operation indication request message is a message for the server to send the operation indication to the broadcast/multicast-service centre BM-SC, and in the embodiment of the present invention, a message type or a message name of the message is not limited.

An M2M industry user or an operator delivers the operation indication to the UE or the UE in the group, and the message is a message for the server to send the operation indication to the BM-SC.

Generally, the server is statically configured with an MBMS server BM-SC of the UE or the group, or the server constructs an FQDN according to position information of the UE or the UE in the group, and performs a DNS query, so as to obtain a serving BM-SC of the UE or the group.

The message may further include a public land mobile network PLMN identity, and the PLMN identity is used to instruct the UE or the UE in the group to perform an operation, such as the registration, subscriber data activation, or service data transmission, in a mobile communications network indicated by the PLMN identity.

Optionally, the server starts a timer after sending an operation indication request message, so as to judge that the operation indication is not sent to a corresponding UE. After the timer expires, if the server does not receive acknowledgement information that is fed back by the UE or the UE in the group and indicates that the operation indication is received, if the server does not receive acknowledgement information that is fed back by a management network element and indicates that the UE or the UE in the group receives the operation indication, or if the server receives information that is fed back by the mobility management network element and indicates that sending the operation indication to the UE or the UE in the group is successful or failed (the information indicating the sending is successful or failed refers to successfully receiving a UE identity, a UE identity list, or a group identity of the operation indication and/or indication information indicating that the sending the operation indication is successful; or failing to receive the UE identity, the UE identity list, or the group identity of the operation indication and/or indication information indicating that the sending the operation indication is failed), it is determined that the operation indication is not sent to a corresponding UE.

S302: The BM-SC receives an operation indication sending request sent by the server, and sends a session start request Session Start Request message to an MBMS-GW.

The BM-SC may select an MBMS-GW according to position information of the UE or the UE in the group.

According to the position information of the UE or the UE in the group, an MBMS control plane-Control Plane or an MBMS control plane Control Plane list may be learned.

S303: The MBMS-GW sends the session start request Session Start Request message to the MBMS control plane-Control Plane.

Specifically, the MBMS-GW allocates an IP multicast address, and sends the Session Start Request message. If the operation indication is sent to a single UE, the message includes the IP multicast address and a UE identity, and may also include the position information of the UE that is to be sent to the MBMS-Control Plane. If the operation indication is sent to the UE in the group, the message includes the IP multicast address and a group identity, and may also include the position information of the UE in the group, where the position information is to be sent to the MBMS-Control Plane. The MBMS-Control Plane learns a corresponding access network element according to the position information of the UE or the position information of the group.

S304: The MBMS-Control Plane sends the session start request Session Start Request message to the access network element corresponding to the position information of the group or the UE, and the message includes the IP multicast address and the UE identity, or includes the IP multicast address and the group identity.

S305: For the IP multicast address, the access network element sends notification information, and the message includes the group identity or the UE identity, after the UE in the group or the UE receives corresponding notification information, the UE in the group or the UE responds to the access network element. The access network element adds a multicast address to a multicast list on an access network side network element.

S306: The access network side initiates a resource creation between the UE and an access network.

S307: After adding the multicast address to the multicast list, a network element of the access network element sends a session start response Session Start Response message to respond to the MBMS-Control Plane.

S308: The MBMS-Control Plane sends the Session Start Response message to respond to an MBMS-GW.

S309: The MBMS-GW sends the Session Start Response message to respond to a BM-SC.

S310: The BM-SC sends, to the MBMS-GW, the operation indication sent by the server, where a PLMN identity is further included in the operation indication.

S311: The MBMS-GW sends the operation indication (may include the PLMN identity) to the UE or the UE in the group through the access network element according to the multicast address.

S312: The UE or the UE in the group obtains the operation indication (optionally, including the PLMN identity), and performs registration, subscriber data activation or service data transmission. For a specific procedure, reference can be made to the step S103 in Embodiment 1.

Subsequent steps S313 and S314 are basically the same as the steps S104 and S105 in Embodiment 1, and are not repeated here.

In this embodiment, the network side sends the operation indication to the user equipment UE or the UE in the group in the multicast manner, without the need of adopting another message to include the operation indication, so that the sending the operation indication becomes more convenient. The network side triggers the user equipment to perform the operation, and the user equipment performs the operation according to the operation indication. The UE or the UE in the group may be in a dormant state or a de-registration state, thereby greatly improving the utilization ratio of network resources and reducing a waste of the network resources.

### Embodiment 4

In this embodiment, a network side sends an operation indication to a UE or a UE in a group in a broadcast manner, and the UE or the UE in the group obtains the operation indication and performs an operation according to the operation indication.

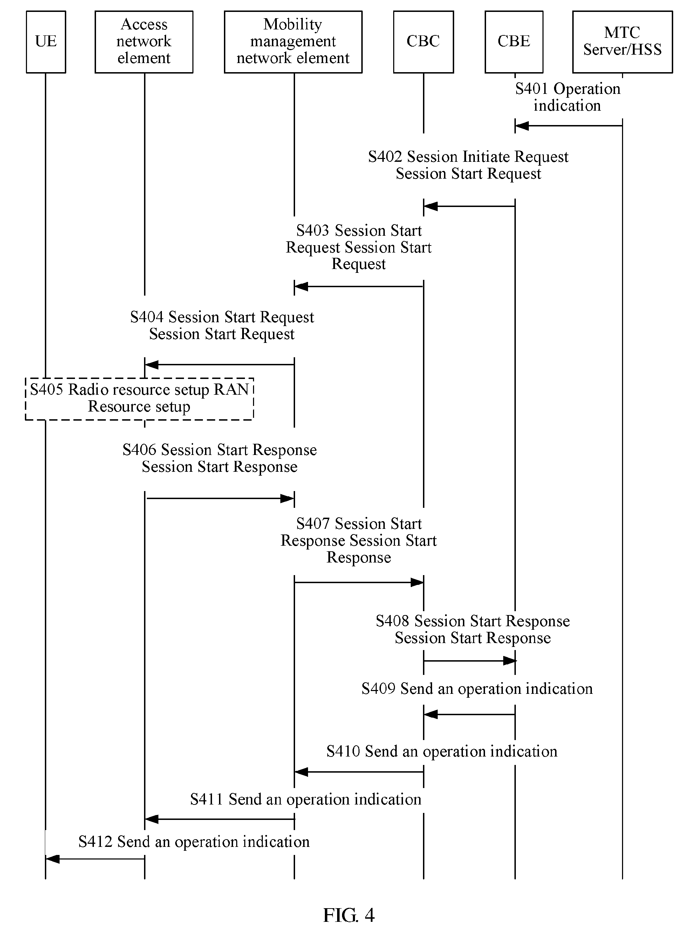

Referring to FIG. 4, an operation control method of a user equipment provided in an embodiment of the present invention includes the following steps:

S401: A server sends an operation indication request message to a cell broadcast entity (CBE, Cell Broadcast Entity); the operation indication request message is a message for the server to send the operation indication to the cell broadcast entity, and in the embodiment of the present invention, a message type or a message name of the message is not limited.

An M2M industry user or an operator delivers the operation indication to the UE or the UE in the group, and the server is configured to send a message of the operation indication to the CBE.

The server is statically configured with a serving CBE of the UE or the group, or the server constructs an FQDN according to position information of the UE or the UE in the group, and performs a DNS query, so as to find the serving CBE of the UE or the UE in the group.

In this embodiment, the UE or the UE in the group may notify, in a manner the same as that described in the embodiments, the server that the UE or the UE receives the operation indication, and the server may also start or stop a timer in a manner the same as that in Embodiment 1, so as to judge whether the operation indication is sent to a corresponding UE or the UE in the group.

S402: The CBE sends a session start request Session Start Request message to a cell broadcast centre (CBC, Cell Broadcast Centre).

Optionally, the CBE may select a CBC according to position information of the UE or the UE in the group. If operation indication information is sent to a single UE, the message includes the UE identity, and optionally, includes the position information of the UE. If the operation indication information is sent to the UE in the group, the message includes the group identity, and optionally, includes the position information of the UE in the group. Optionally, the CBC may learn an available mobility management network element or an available mobility management network element identity list according to the position information of the UE or the UE in the group, where the available mobility management network element or the available mobility management network element identity list serves the UE or the UE in the group.

S403: The CBC sends a Session Start Request message to the mobility management network element.

S404: The mobility management network element sends a Session Start Request message to an access network element or access network elements in an access network element list, where the access network element or the access network elements in the access network element list can serve the UE or the UE in the group, and the message includes a UE identity or a group identity.

S405: Radio resources between the access network element and the UE are established.

S406-S408: The access network element responds to the mobility management network element, and the mobility management network element responds to session start requests of the CBC and the CBE.

S409-S412: The CBE sends the operation indication to the access network element in a broadcast manner, and optionally, a PLMN identity is included. The access network element initiates a broadcast to the UE in the group or the UE, and a broadcast message includes the operation indication, and optionally, includes the PLMN identity, the UE identity, or the group identity. The UE or the UE in the group receives the broadcast message, that is, receives the operation indication.

S413: The UE or the UE in the group obtains the operation indication (optionally, including the PLMN identity), and performs registration, subscriber data activation or service data transmission. For specific description, reference can be made to the step S103 in Embodiment 1.

Subsequent steps S414 and S415 are basically the same as the steps S104 and S105 in Embodiment 1, and are not repeated here.

In this embodiment, the network side sends the operation indication to the equipment UE or the UE in the group in the broadcast manner, without the need of adopting another message to include the operation indication, so that the sending the operation indication becomes more convenient. The network side triggers the user equipment to perform the operation, and the user equipment performs the operation according to the operation indication. The UE or the UE in the group may be in a dormant state or a de-registration state, thereby greatly improving the utilization ratio of network resources.

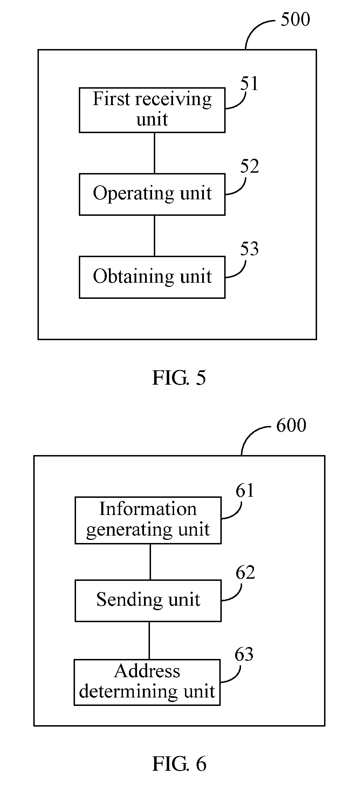

Referring to FIG. 5, a user equipment 500 provided in an embodiment of the present invention includes:
a first receiving unit 51, configured to receive information that includes an operation indication and is sent by a network side;
an operating unit 52, configured to perform an operation according to the received operation indication.

The user equipment 500 further includes:
an obtaining unit 53, configured to obtain a public land mobile network PLMN identity; where
the operating unit 52 performs the operation in a mobile communications network corresponding to the PLMN identity.

The operation indication specifically includes:
performing an operation at a specific time point or in a specific period of time; or triggering, by a specific event, the operating unit to perform an operation.

The operation comprises at least one of registration, subscriber data activation, and service data transmission.

Referring to FIG. 6, an embodiment of the present invention further provides a server 600, which includes an information generating unit 61 and a sending unit 62.

The information generating unit 61 is configured to initiate an operation indication request that instructs an M2M user equipment UE or an M2M user equipment in a group to operate, where the operation indication includes at least one of the following indications:
an indication that instructs the M2M user equipment UE or the M2M user equipment UE in the group to perform registration, an indication that instructs the M2M user equipment UE or the M2M user equipment UE in the group to activate subscriber data, or an indication that instructs the M2M user equipment UE or the M2M user equipment UE in the group to perform service data transmission.

The sending unit 62 is configured to send information including the operating indication.

The server 600 further includes:
an address determining unit 63, configured to determine an available mobility management network element identity list or an available mobility management network element according to position information of the M2M user equipment UE or the M2M user equipment UE in the group; where
the sending unit 62 is configured to send the information including the operation indication to all mobility management network elements in the mobility management network element identity list or the available mobility management network element.

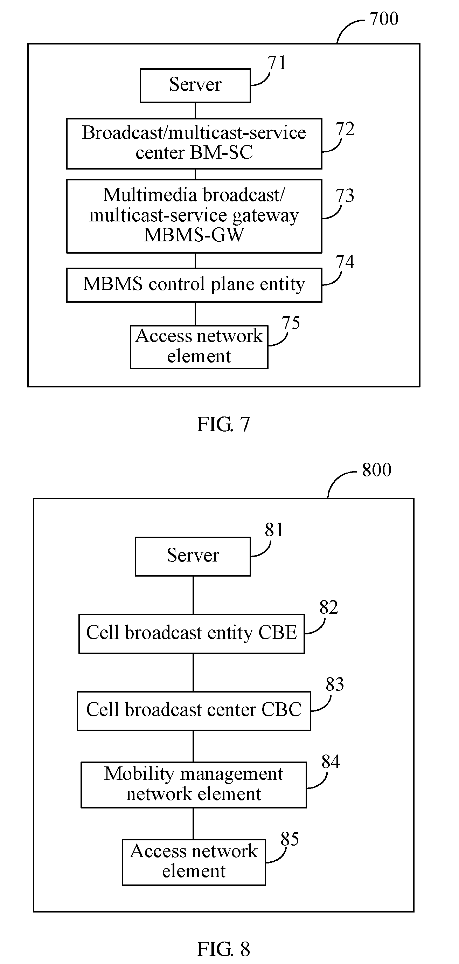

Referring to FIG. 7, another operation control system 700 of a user equipment provided in an embodiment of the present invention includes:
a server 71, configured to initiate a operation indication request that instructs a user equipment UE or a user equipment in a group to perform an operation, where the operation indication request is a message for the server to request a control network element (for example, a mobility management network element) to send the operation indication to the user equipment UE, and in the embodiment of the present invention, a message type or a message name of the request is not limited;
a broadcast/multicast-service centre BM-SC 72, configured to select a multimedia broadcast/multicast-service gateway MBMS-GW 73 according to position information of the user equipment UE or the UE in the group, and send the request message to the multimedia broadcast/multicast-service gateway MBMS-GW 73 after receiving the operation indication sending request from the server;
the multimedia broadcast/multicast-service gateway MBMS-GW 73, configured to learn a multimedia broadcast/multicast-service MBMS control plane entity or an MBMS control plane entity list according to the position information of the UE or the UE in the group; allocates a multicast address and sends the request message to the MBMS control plane entity;
the MBMS control plane entity 74, configured to send the request message to an access network element corresponding to the user equipment or the UE in the group, where the message includes an IP multicast address and an identity of the UE, or the message includes an IP multicast address and an identity of the group; and
the access network element 75, configured to send the operation indication to the UE or the UE in the group according to the multicast address.

The operation indication includes at least one of the following indications:
an indication that instructs the user equipment UE or the user equipment UE in the group to perform registration, an indication that instructs the user equipment UE or the user equipment UE in the group to activate subscriber data, or an indication that instructs the user equipment UE or the user equipment UE in the group to perform service data transmission.

Referring to FIG. 8, still another operation control system 800 of a user equipment provided in an embodiment of the present invention includes:
a server 81, configured to initiate an operation indication request that instructs a user equipment UE or a user equipment in a group to operate; learn a cell broadcast entity CBE that serves the user equipment UE or the UE in the group, and send an operation indication sending request to the cell broadcast entity CBE;
a cell broadcast entity CBE 82, configured to receive the operation indication sending request from the server; select a cell broadcast centre CBC according to position information of the UE or the UE in the group, and send an operation indication sending request to the cell broadcast centre CBC;
a call broadcast centre CBC 83, configured to receive the operation indication sending request from the cell broadcast entity CBE; determine a mobility management network element or all mobility management network elements in a mobility management network element identity list according to the position information of the UE or the UE in the group, and send the operation indication sending request to the determined mobility management network element or all the mobility management network elements in the mobility management network element identity list;
a mobility management network element 84, configured to establish a session connection with the cell broadcast centre and the access network element respectively, send the operation indication sending request from the cell broadcast centre to an access network element or all access network elements in an access network element list, where the access network element or all the access network elements in the access network element list can serve the UE or the UE in the group, and the message includes an operation indication and at least one of a UE identity and a group identity; and
an access network element 85, configured to broadcast the operation indication to the user equipment UE or the UE in the group.

The operation indication includes at least one of the following indications:
an indication that instructs the user equipment UE or the user equipment UE in the group to perform registration, an indication that instructs the user equipment UE or the user equipment UE in the group to activate subscriber data, or an indication that instructs the user equipment UE or the user equipment UE in the group to perform service data transmission.

In view of the foregoing description, in the technical solutions provided in the embodiments of the present invention, the network side sends the operation indication to the user equipment UE or the UE in the group, and after the user equipment receives the operation indication, the user equipment performs the operation according to the operation indication. The network side controls the user equipment to perform the operation, and can instruct the UE to perform the operation such as the registration, the subscriber data activation or the service data transmission at any time. The UE or the UE in the group may be in a dormant state or in a de-registration state, the impact and effect on the network side caused by a large number of user equipments UEs are reduced, so as to improve the utilization ratio of network resources greatly and satisfy a current M2M application. The delivery and execution of the operation indication do not need the participation of humans, thereby providing convenient and effective services to operators and users.

Definitely, persons skilled in the art should understand that, units and modules or steps in the embodiments of the present invention may be implemented through general computer devices, and may be integrated on a single computer device, or distributed on a network formed by a plurality of computer devices. Optionally, they may be implemented by program codes that can be executed by computer devices, and therefore, they may be executed by the computer device after being stored in a storage device, or they are made into individual integrated circuit modules respectively, or several units and modules or steps are made into a single integrated circuit module to be implemented. In this way, the embodiments of the present invention are not limited to the combination of any specific hardware and software.

The foregoing description is merely about exemplary implementation solutions of the embodiments of the present invention, and is not intended to limit the protection scope of the present invention. Any modification, equivalent replacement, and improvement made without departing from the spirit and principle of the present invention all fall in the protection scope of the embodiments of the present invention.

## Claims

1. An operation control method of machine to machine application M2M user equipment, comprising:
receiving information that comprises an operation indication and is sent by a network side; wherein the operation indication comprises at least one of the following indications: an indication that instructs a user equipment UE or user equipment UE in a group to perform registration, an indication that instructs a user equipment UE or user equipment UE in a group to activate subscriber data, or an indication that instructs a user equipment UE or user equipment UE in a group to perform service data transmission; and
performing, by the user equipment UE or user equipment UE in the group, operation according to the received operation indication.

2. The operation control method according to claim 1, wherein if the information comprising the operation indication further comprises a time point, the user equipment or the user equipment UE in the group triggers to perform registration, subscriber data activation, or service data transmission at the time point; or
if the information comprising the operation indication further comprises a period of time, the user equipment or the user equipment UE in the group triggers to perform registration, subscriber data activation, or service data transmission in the period of time; or
if the information comprising the operation indication further comprises an event, the user equipment or the user equipment UE in the group triggers to perform registration, subscriber data activation, or service data transmission according to the event.

3. The operation control method according to claim 1, wherein the information comprising the operation indication further comprises UE addressing information, and the UE addressing information is used to address the user equipment UE or the user equipment UE in the group that needs to perform the operation according to the operation indication.

4. The operation control method according to claim 3, wherein the UE addressing information comprises at least one of the following: a user equipment identity, a group identity, an IP address, and a multicast address.

5. The operation control method according to claim 1, further comprising:
receiving, by the user equipment UE or the user equipment UE in the group, a public land mobile network PLMN identity sent by the network side; and
performing, by the user equipment UE or the user equipment UE in the group, an operation in a mobile communications network corresponding to the PLMN identity.

6. The operation control method according to any one of claims 1 to 4, wherein the operation indication is sent to the user equipment UE or the user equipment in the group by the network side through at least one of the following manners:
sending the operation indication by using a paging request message, using a Non-Access-Stratum NAS message, using an Open Mobile Alliance Device Management OMA DM manner, using Over-The-Air OTA, using a multicast manner, or a broadcast manner.

7. The operation control method according to claim 6, further comprising:
determining an list of available mobility management network element identity or an available mobility management network element according to position information of the user equipment UE or the user equipment UE in the group;
sending the operation indication to all mobility management network elements in the list of mobility management network element identity or the available mobility management network element; and
sending, by all the mobility management network elements in the list of mobility management network element identity or the available mobility management network element, the operation indication to the user equipment UE or the user equipment UE in the group through an access network element.

8. The operation control method according to claim 5, wherein the sending the operation indication through a multicast manner specifically comprises:
receiving, by a broadcast/multicast-service centre BM-SC, an operation indication sending request from a server;
selecting, by the broadcast/multicast-service centre BM-SC, a multimedia broadcast/multicast-service gateway MBMS-GW according to the position information of the user equipment UE or the user equipment UE in the group, and send a request message to the MBMS-GW;
learning, by the MBMS-GW, a multimedia broadcast/multicast service MBMS control plane entity or an MBMS control plane entity list according to position information of the user equipment UE or the UE in the group; allocating a multicast address and sending the request message to the MBMS control plane entity or all MBMS control plane entities in the MBMS control plane entity list; and
sending, by the MBMS control plane entity, the operation indication to the UE or the UE in the group through an access network element.

9. The operation control method according to claim 3, wherein the sending the operation indication through a broadcast manner specifically comprises:
learning, by a server, a cell broadcast entity CBE serving the user equipment UE or the UE in the group, and sending an operation indication sending request to the cell broadcast entity CBE;
receiving, by the cell broadcast entity CBE, the operation indication sending request from the server; select a cell broadcast centre CBC according to position information of the UE or the UE in the group, and send the operation indication sending request to the cell broadcast centre CBC;
receiving, by the call broadcast centre CBC, the operation indication sending request from the cell broadcast entity CBE; determining a mobility management network element or all mobility management network elements in a mobility management network element identity list according to the position information of the user equipment UE or the UE in the group, and sending the operation indication sending request to the determined mobility management network element or all the mobility management network elements in the mobility management network element identity list; and
sending, by the mobility management network element or all the mobility management network elements in the mobility management network element identity list, the operation indication to the user equipment UE or the UE in the group through an access network element.

10. The operation control method according to claim 1, further comprising:
after sending, by the network side, the information comprises the operation indication, if determining that the user equipment UE or the UE in the group does not receive the sent operation indication in a predetermined period of time;
setting a corresponding state of the user equipment UE or the UE in the group, wherein the state comprises at least one of the following states: a non-registered state, a subscriber data non-activated state, or a service non-initiated state; and/or
sending, by the network side, the information comprising the operation indication to the user equipment UE or the UE in the group again.

11. The operation control method according to claim 1, further comprising:
starting a timer, after sending, by a server, an operation indication request message;
in a time limit set by the timer, receiving, by the server, no operation indication sending response message sent by a mobility management network element; or
receiving, by the server, an operation indication sending response message sent by a mobility management network element, wherein the response message comprises indication information indicating that the UE or the UE in the group does not receive the operation indication; or
in a predetermined time, if the server does not receive acknowledgement information that is sent by a corresponding UE or UE in the group and indicates that the operation indication is received, determining, by the server, that the operation indication is not sent to the corresponding UE or the UE in the group.

12. The operation control method according to claim 1, wherein:
if the received operation indication is a public land mobile network PLMN identity;
the user equipment UE or the user equipment UE in the group registers in a mobile communications network corresponding to the PLMN identity.

13. A user equipment of machine to machine application M2M, comprising:
a first receiving unit, configured to receive information that comprises an operation indication and is sent by a network side, wherein the operation indication comprises at least one of the following indications: an indication that instructs a UE or UE in a group to perform registration, an indication that instructs a user equipment UE or UE in a group to activate subscriber data, or an indication that instructs a user equipment UE or UE in a group to perform service data transmission; and
an operating unit, configured to perform an operation according to the received operation indication.

14. The user equipment according to claim 13, further comprising:
an obtaining unit, configured to obtain a public land mobile network PLMN identity; wherein
the operating unit performs the operation in a mobile communications network corresponding to the PLMN identity.

15. The user equipment according to claim 13, wherein the information comprising the operation indication further comprises a time point or a period of time, or an event;
the operating unit performs the operation at the time point or in the period of time, or under triggering of the event; and
the operation comprises at least one of registration, subscriber data activation, and service data transmission.

16. A server, comprising: an information generating unit, and a sending unit, wherein
the information generating unit is configured to initiate an operation indication request that instructs an M2M user equipment UE or user equipment in an M2M group to operate, wherein the operation indication comprises at least one of the following indications:
an indication that instructs the M2M user equipment UE or the M2M user equipment UE in the group to perform registration, an indication that instructs the user equipment UE or the user equipment UE in the group to activate subscriber data, or an indication that instructs the M2M user equipment UE or the M2M user equipment UE in the group to perform service data transmission; and
the sending unit is configured to send the operation indication.

17. The server according to claim 16, further comprising:
an address determining unit, configured to determine a list of available mobility management network element identity or an available mobility management network element according to position information of the user equipment UE or the user equipment UE in the group; wherein
the sending unit is configured to send the operation indication to all mobility management network elements in the mobility management network element identity list or the available mobility management network element.

18. An system controlling operation of user equipment, comprising:
a server, configured to initiate an operation indication request that instructs a user equipment UE or UE in a group to operate;
a broadcast/multicast-service centre BM-SC, configured to learn a multimedia broadcast/multicast-service gateway MBMS-GW according to position information of the user equipment UE or the UE in the group, and send a request message to the MBMS-GW after a operation indication sending request is received from the server;
the multimedia broadcast/multicast-service gateway MBMS-GW, configured to learn a multimedia broadcast/multicast service MBMS control plane entity or an MBMS control plane entity list according to the position information of the user equipment UE or the UE in the group; allocate a multicast address and send the request message to the MBMS control plane entity or all MBMS control plane entities in the MBMS control plane entity list;
the MBMS control plane entity, configured to send the request message to an access network element corresponding to the user equipment UE or the UE in the group, where the message comprises an IP multicast address and an identity of the user equipment UE, or the message comprises an IP multicast address and an identity of the group; and
the access network element, configured to send the operation indication to the user equipment UE or the UE in the group according to the multicast address; wherein
the operation indication comprises at least one of the following indications:
an indication that instructs the user equipment UE or the user equipment UE in the group to perform registration, an indication that instructs the user equipment UE or the UE in the group to activate subscriber data, or an indication that instructs the user equipment UE or the UE in the group to perform service data transmission.

19. An system controlling operation of a user equipment, comprising:
a server, configured to initiate an operation indication request that instructs a user equipment UE or user equipment in a group to operate; learn a cell broadcast entity CBE that serves the user equipment UE or the UE in the group, and send an operation indication sending request to the cell broadcast entity CBE;
the cell broadcast entity CBE, configured to receive the operation indication sending request from the server; select a cell broadcast centre CBC according to position information of the UE or the UE in the group, and send the operation indication sending request to the cell broadcast centre CBC;
the call broadcast centre CBC, configured to receive the operation indication sending request from the cell broadcast entity CBE; determine a mobility management network element or all mobility management network elements in a mobility management network element identity list according to the position information of the user equipment UE or the UE in the group, and send the operation indication sending request to the determined mobility management network element or all the mobility management network elements in the mobility management network element identity list;
the mobility management network element, configured to send the operation indication sending request from the cell broadcast centre to an access network element or all access network elements in an access network element list, where the access network element or all the access network elements in the access network element list can serve the UE or the UE in the group, and the message comprises an operation indication and at least one of a UE identity and a group identity; and
the access network element, configured to send the operation indication to the user equipment UE or the UE in the group; wherein
the operation indication comprises at least one of the following indications:
an indication that instructs the user equipment UE or the user equipment UE in the group to perform registration, an indication that instructs the user equipment UE or the user equipment UE in the group to activate subscriber data, or an indication that instructs the user equipment UE or the user equipment UE in the group to perform service data transmission.
